# EUROPEAN PATENT APPLICATION

(11) **EP 4 488 116 A1**
(43) Date of publication of application: **08.01.2025**
(21) Application number: 22928802.2
(22) Date of filing: 31.03.2022
(51) Int. Cl.: B60P 3/325, B62D 33/06

(54) **CAMPER VAN**

(30) Priority: 28.02.2022 JP 2022028970
(71) Applicant: Vantech Inc., Tokorozawa-shi, Saitama 359-0015 (JP)
(72) Inventor: SATO, Toru, Tokorozawa-shi, Saitama 359-0015 (JP)
(74) Representative: Plougmann Vingtoft a/s
(86) International application number: PCT/JP2022/016614
(87) International publication number: WO 2023/162280

(57) **Abstract**

[Problem] To provide a camping vehicle that is of a type termed an integrated type, and in which a blind spot produced by protrusion of a front end of the shell can be reduced, thus a field of view can be enlarged, and the entire shape of the camping vehicle can reduce a loss of drag coefficient (Cd value) caused by a flow of air coming from front or lateral sides during traveling.

[Solution] The camping vehicle includes a pickup truck as a base vehicle 1 and a shell 2 that is carried and mounted on a bed 5 to serve as a living space. An inside of the shell 2 and an inside of the base vehicle 1 are made to communicate with each other so as to enable direct movement from the inside of the base vehicle 1 to the inside of the base, and wherein an external shape of a protruding front end 9 provided on a front side of the shell 2 is formed as a steep upslope surface that extends at an angle close to vertical, and the protruding front end 9 is formed such that a protrusion length of the protruding front end 9 is within a front-rear length of a windshield surface 10, so as to reduce protrusion of the protruding front end 9 positioned above a driver's seat part, enlarging a field of view, and so as to reduce a loss of drag coefficient.

## Description

### TECHNICAL FIELD

The present invention relates to a camping vehicle configured such that, for example, a pickup truck is used as a base vehicle, and such that a shell for a living space is carried and mounted on a bed of the base vehicle and on a vehicle roof above a vehicle seat.

### BACKGROUND ART

As a camping vehicle, a camping vehicle termed a vehicle-mounted type is known. In the vehicle-mounted type, for example, a shell serving as a living space is carried on the bed of a truck serving as a base vehicle and on a vehicle roof above a vehicle seat, and the shell is fixed to the truck mainly with turnbuckles or the like. In the camping vehicle industry, the camping vehicle of this type is termed a pickup cabin or the like.

The pickup cabin is of a type in which the shell is detachable, but it is typically impossible to go back and forth between the inside of the base vehicle and the inside of the shell serving as a living space, and going back and forth between the base vehicle and the shell requires once getting out of the vehicle and entering through doors of the base vehicle and the shell. It is therefore impossible to move from a driver's seat to the shell during traveling.

Next, a camping vehicle of a type termed an integrated type is generally known. In the integrated type, for example, a shell serving as a living space is coupled and fixed to a truck with a mounting frame or the like or coupled and fixed directly to the body of the truck with bolts, by bonding, or the like. In the camping vehicle industry, the camping vehicle of this type is called a micromini or the like.

In addition, the micromini typically has a structure inside which the base vehicle and the shell serving as a living space communicate with each other, and in which the shell is undetachable.

### [Citation List]

### [Patent Documents]

[Patent Document 1] Japanese Unexamined Patent Application Publication No. 2019-034649

### DISCLOSURE OF THE INVENTION

### Problems to be solved by the invention

Thus, the present invention can provide a camping vehicle that is of a type termed the integrated type and is obtained by making improvements on a conventional camping vehicle termed the integrated type. In the camping vehicle, a base vehicle and a shell installed in the base vehicle are integrated together, and the camping vehicle is well-coordinated as a whole and has an excellent exterior shape. An objective of the present invention is to provide a camping vehicle in which a blind spot for a driver during traveling produced by the protrusion of the front end of the shell can be reduced, thus a field of view can be enlarged, further, the entire shape of the camping vehicle can reduce a loss of drag coefficient (Cd value) caused by a flow of air coming from front or lateral sides during traveling, and a consequent influence such as drift can be minimized. Solutions to problems

According to an aspect of the present invention, there is provided a camping vehicle including a pickup truck as a base vehicle and a shell carried and mounted on a bed of the pickup truck to serve as a living space,
wherein an inside of the shell and an inside of the base vehicle are made to communicate with each other by a communication opening so as to enable direct movement from the inside of the base vehicle to an inside of a base,
wherein an external shape of a protruding front end provided on a front side of the shell is formed as a steep upslope surface that extends from a lower end toward an upper end of a front end of the shell at an angle close to vertical, and the protruding front end is formed such that a protrusion length of the protruding front end is within a front-rear length of a windshield surface of the base vehicle, so as to reduce a blind spot produced by protrusion of the protruding front end positioned above a driver's seat part for enlarging a field of view, and so as to reduce a loss of drag coefficient (Cd value) caused by a flow of air coming from front,
wherein, on a front-end surface of the protruding front end, concave shapes continuously arranged in a width direction are formed at a plurality of locations to produce small turbulent flows in air flowing around the protruding front end during traveling, and the turbulent flows are higher in viscosity than a laminar flow to reduce a loss of drag coefficient (Cd value), and
wherein while the shell is joined to the base vehicle with a width of the shell being made larger than a width of the base vehicle so as to widen a living space in the shell, windows on both lateral side surfaces of the shell are formed such that the windows are retracted inward so as to restrain air drag and ensure stability in driving, the air drag is produced by lateral steps at a joined portion between the shell and the base vehicle, and slope surfaces extend from outer lateral surfaces of the shell toward positions of outer circumferences of the windows are formed to decrease a rate of change in section of the outer lateral surfaces of the shell.

In the camping vehicle, a location facing a substantially-upper-end position of a front-side vertical end of each window may be taken as a start point, a vortex generator forming member with a linear corrugation may be bifurcated into parts from the start point, one of the bifurcated parts of the vortex generator forming member may be provided obliquely upward so as to be positioned above an upper-side horizontal end of the window and, after being positioned above the upper-side horizontal end of the window, may be formed extending parallel to the upper-side horizontal end of the window, and another of the bifurcated parts of the vortex generator forming member may be provided obliquely downward from the location that is taken as the start point and faces the substantially-upper-end position of the front-side vertical end of the window and, after being provided obliquely downward, may be formed extending substantially parallel to a lower-side horizontal end of the window.

In the camping vehicle, the base vehicle may be a used vehicle.

### Advantageous effects of the invention

According to the present invention, it is possible to provide a camping vehicle in which a base vehicle and a shell installed in the base vehicle are integrated together, and that is well-coordinated as a whole and has an excellent exterior shape. In addition, the present invention achieves an excellent effect of, for example, providing a camping vehicle in which a blind spot for a driver during traveling produced by protrusion of a front end of the shell can be reduced, thus a field of view can be enlarged, further, the entire shape of the camping vehicle can reduce a loss of drag coefficient (Cd value) caused by a flow of air coming from front or lateral sides during traveling, and a consequent influence such as drift can be minimized.

### DESCRIPTION OF EMBODIMENTS

Hereinafter, the present invention will be described on the basis of embodiments illustrated in the accompanying drawings.

A camping vehicle according to the present invention is a camping vehicle in which a vehicle including a bed 5, such as a pickup truck, is used as a base vehicle 1, and a shell 2 serving as a living space is carried and mounted on the bed 5 and on a vehicle roof 7 above a vehicle seat. Note that the base vehicle 1 is not limited to a new vehicle and may be a used vehicle.

The inside of the shell 2 and the inside of the base vehicle 1 are made to communicate with each other by a communication opening 3, providing a structure that enables direct movement from the inside of the base vehicle 1 (e.g., a rear seat) to the inside of the base 2 (living space 6). Therefore, in many cases, the camping vehicle according to the present invention usually does not include, on the shell 2 side, a door to the outside.

Here, as illustrated in the figures, the shell 2 includes the living space 6 placed on the bed 5 and a bed space 8 placed on the vehicle roof 7 provided above a driver's seat and the rear seat in the base vehicle 1.

Here, the bed space 8, which includes a protruding front end 9 formed protruding frontward from the front of the vehicle roof 7, is typically loaded on the vehicle roof 7, and thus the bed space 8 has an external shape that is formed to be a substantially flat shape as a whole.

That is, as understood from the figures, since the bed 5 and the vehicle roof 7 are different in height position from each other, the external shape of the bed space 8 has to be in a substantially flat shape with a decreased thickness so as to form a roof formed on the upper surface of the shell 2 at a consistent height.

Here, the shape of the front-end surface of the protruding front end 9 is formed as a steep upslope surface 16 extending from a lower end toward an upper end of the front-end surface at an angle close to substantially vertical, a gentle upslope surface 17 extending from the upper end toward the rear of the shell 2 is formed, and a horizontal surface 18 extending from the rear end of a portion of the roof above the bed space 8 and is an almost horizontal roof surface is formed as the roof of the living space 6. With the shapes described above, the roof of the shell 2 is configured.

In addition, the protruding front end 9 is formed such that the protrusion length of the protruding front end 9 does not make the protruding front end 9 protrude frontward from the middle position of a windshield surface 10 of the base vehicle 1 in a front-rear-direction length 19.

This is because, by forming the protruding front end 9 having such a shortened protrusion length, the protruding front end 9 positioned above a driver's seat 11 does not create a large blind spot in a front field of view, and thus the blind spot is reduced, and a preferably enlarged field of view is provided. However, when the protrusion length is shortened, the vehicle body experiences a significant air drag during traveling, and as a result, there is a concern about the occurrence of vibrations, lateral sway, and the like of the vehicle body.

Here, the shape of a protruding front end 9 of a conventional camping vehicle will be described. The front-end surface of the conventional protruding front end 9 is formed in a sharp wedge shape that is elongated frontward. Such a shape is intended to reduce a loss of drag coefficient (Cd value) due to compression of air coming from the front. However, as described above, when the conventional sharp wedge shape elongated frontward is formed, the protrusion length of the protruding front end 9 makes the protruding front end 9 create a large blind spot in a front field of view.

Therefore, the present inventor forms the steep upslope surface 16 extending from the lower end toward the upper end of the front-end surface at the angle close to substantially vertical, forms the gentle upslope surface 17 extending from the upper end, and forms the horizontal surface 18 extending from the rear end of the portion of the roof above the bed space 8 and being the almost horizontal roof surface. In addition, the present inventor forms the protruding front end 9 having such a length that the protruding front end 9 does not protrude frontward from the middle position of the windshield surface 10 of the base vehicle 1 in the front-rear-direction length 19.

Such formation of the front-end surface and the protrusion length of the protruding front end 9 and formation of the roof of the shell 2 can significantly reduce a loss of drag coefficient (Cd value) due to the compression of air coming from the front. Furthermore, the protruding front end 9 does not create a large blind spot for a driver in a front field of view, and thus the blind spot is reduced, so that a preferably enlarged field of view is provided.

Moreover, the present inventor also adopts the following approach as an approach to the reduction of a loss of drag coefficient (Cd value) due to compression of air coming from the front.

That is, on the front-end surface of the protruding front end 9, a plurality of concave shapes 12 continuously arranged in the width direction of the front-end surface are formed. Here, although no limitation is imposed on the external shape of the concave shapes 12, the concave shapes 12 are assumed to be in a substantially triangular shape in the present embodiment.

This is because the plurality of concave shapes 12 formed on the front-end surface of the protruding front end 9 in this manner produce small turbulent flows, which are higher in viscosity than laminar flows, in air flowing around the protruding front end 9 during traveling, and therefore the concave shapes 12 reduce a loss of drag coefficient (Cd value).

As described above, even a nose that is by no means long, such as the protruding front end 9 according to the present invention, can reduce micro-barometric waves, reduce even sound produced on the rear side, and additionally restrain lateral sway, which has a great influence on ride comfort. That is, a wind tunnel test demonstrated that, particularly during traveling at high speed, even shaking of the vehicle body can be restrained when air around the driver's seat flows.

By forming a portion of the front-end surface of the protruding front end 9 whose sectional area is small as a surface at an angle close to vertical in this manner, pressure is distributed across the surface, and thus a loss of drag coefficient (Cd value) by compression of air can be decreased. In addition, since the portion is formed as a surface at an angle close to vertical, the protrusion length of the protruding front end 9 can be shortened without a significant loss of drag coefficient. This further leads to the reduction in materials, and not forming the front-end surface at an acute angle leads to easiness of machining.

Next, in the present invention, as illustrated in the figures, the shell 2 is joined to the base vehicle 1 with the breadth of the shell 2 being made larger than the breadth of the base vehicle 1. This further widens the living space in the shell 2, enabling the provision of a comfortable living space.

Here, in a case where joining the shell 2 having a widened living space to the base vehicle 1 is intended, there is a concern about an increase in air drag at the joint 21 by lateral steps 24 that develop between lateral side surfaces of the base vehicle 1 and lateral side surfaces of the shell 2.

Hence, in the present invention, to restrain the increase in air drag, which is the cause for concern, and to ensure stability in driving, in a case where windows 13 are provided on both lateral side surfaces of the shell 2 in a breadth direction of the shell 2, the windows 13 and the lateral side surfaces at positions in the vicinities of the windows 13 are formed recessed inward. In addition to this, downward slope surfaces 20 are formed from the lateral side surfaces of the shell 2 in the breadth direction toward the positions of outer circumferences of the windows. This can decrease a rate of change in section of the lateral side surfaces of the shell 2 in the breadth direction, and thus what is called the area-rule-like effect can be achieved.

That is, compared to a vehicle part of the base vehicle 1 that assumes a power unit, the shell 2 being a living part of the camping vehicle has a large breadth, and thus the lateral steps develop at the joined portion 21. As a result, during traveling, a change in pressure around the lateral steps 24 at the joint 21 is increased, which raises a concern that the change in pressure will increase air drag and will influence stability in driving. Hence, to remove the concern, the downward slope surfaces 20 are formed from the lateral side surfaces of the shell 2 in the breadth direction toward the positions of the outer circumferences of the windows so as to decrease the rate of change in section at the joint 21.

Next, reference numeral 15 indicates vortex generator forming members that are formed on the lateral side surfaces of the shell 2 in the width direction of the shell 2. The vortex generator forming members 15 have the effect of reducing air drag by intentionally generating turbulent flows, thus restraining boundary layer separation of air flowing around the vehicle body.

Air interacting with a vehicle traveling at an increased speed has such a characteristic that the air becomes viscous like oil. Here, in a case where the vehicle body is formed with smooth curved surfaces, air smoothly flows along the smooth curved surfaces of the vehicle body, while air separated from the vehicle body at uneven portions of the vehicle body and in the vicinities of vehicle-roof ends that abruptly end stagnates in the form of complex air turbulence, thus hindering the air flow and producing air vortices.

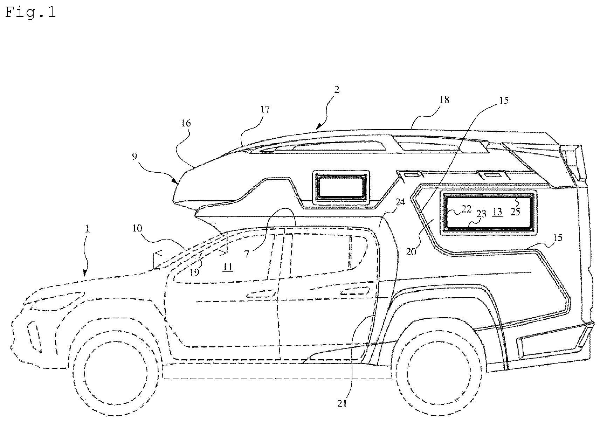

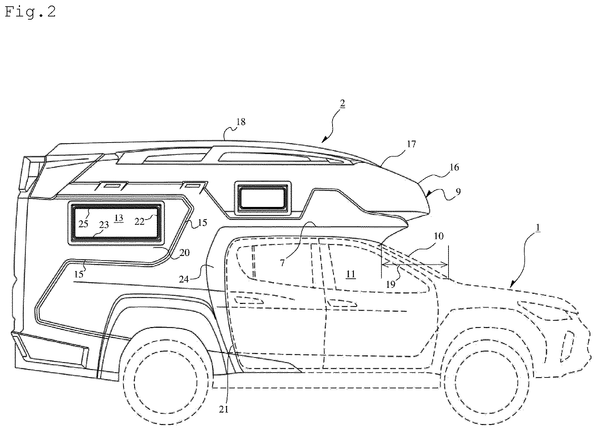

In this case, the vortex generator forming members 15 formed on the vehicle body, particularly vortex generator forming members 15 each having a streamlined shape formed with linear corrugations as illustrated in FIG. 1 and FIG. 2, can turn the air vortices into well-ordered vortices, thus straightening the air. Therefore, as illustrated in the figures, by attaching the vortex generator forming members 15 to portions of both lateral side surfaces of the shell 2 in the width direction, vibrations produced by rocking by air turbulence are weakened, and the vehicle exhibits calm and controlled behavior.

As illustrated in the figures, by providing the vortex generator forming members 15 on the lateral side surfaces of the shell 2 in this manner, small turbulent flows being higher in viscosity than laminar flows are produced in air flowing around the lateral side surfaces of the shell 2 to eliminate the phenomenon that causes a high air drag.

That is, during traveling of the vehicle, air turbulence produced by the separation of air from the vehicle body vibrates the vehicle body and produces negative pressure that produces a force pulling the vehicle body rearward. However, by providing the vortex generator forming members 15 as illustrated in the figures on the lateral side surfaces of the shell 2, the air turbulence clinging to the vehicle body can be passed rearward efficiently.

Here, the effect achieved by providing the vortex generator forming members 15 varies depending on the shape, number, and attachment positions of the vortex generator forming members 15.

In the present invention, the vortex generator forming members 15 with linear corrugations are provided on boundaries between both lateral side surfaces of the shell 2 in the width direction and the downward slope surfaces 20 formed on the lateral side surfaces such that the vortex generator forming members 15 surround the windows 13 provided recessed on the lateral side surfaces of the shell 2.

That is, a start point is provided at a location that faces a substantially-upper-end position of a front-side vertical end 22 of the window 13 and is slightly spaced away from the substantially-upper-end position, the vortex generator forming member 15 with linear corrugations is bifurcated into parts at the start point, one of the bifurcated parts of the vortex generator forming member 15 is provided obliquely upward so as to be positioned above an upper-side horizontal end 25 of the window 13, and then the one of the bifurcated parts of the vortex generator forming member 15 is further formed extending parallel to the upper-side horizontal end 25 of the window 13.

In addition, the other of the bifurcated parts of the vortex generator forming member 15 is formed extending obliquely downward from the location that is taken as the start point and faces the substantially-upper-end position of the front-side vertical end 22 of the window 13 and is further formed extending substantially parallel to a lower-side horizontal end 23 of the window 13.

That is, the location facing the substantially-upper-end position of the front-side vertical end of the window 13 is taken as the start point, the vortex generator forming member 15 with linear corrugations is bifurcated into parts in two directions from the start point. One of the bifurcated parts of the vortex generator forming member 15 is formed extending obliquely upward so as to be positioned above the upper-side horizontal end 25 of the window 13 and, after being positioned above the upper-side horizontal end 25 of the window 13, is formed extending parallel to the upper-side horizontal end 25 of the window 13. The other of the bifurcated parts of the vortex generator forming member 15 is formed extending obliquely downward from the location that is taken as the start point and faces the substantially-upper-end position of the front-side vertical end 22 of the window 13 and, after being formed extending obliquely downward, is formed extending substantially parallel to the lower-side horizontal end 23 of the window 13.

Accordingly, by forming the vortex generator forming members 15 extending in this manner, combined with forming the downward slope surfaces 20 from the lateral side surfaces of the shell 2 in the breadth direction toward the positions of the outer circumferences of the windows, in other words, from the front toward the rear of the vehicle body, the effect of improving the stability in straight driving of the camping vehicle and reducing the air drag caused by the negative pressure is achieved. That is, a vortex generation effect is obtained.

### BRIEF DESCRIPTION OF DRAWINGS

FIG. 1 is a configuration explanatory diagram (1) of a camping vehicle according to the present invention.
FIG. 2 is a configuration explanatory diagram (2) of the camping vehicle according to the present invention.

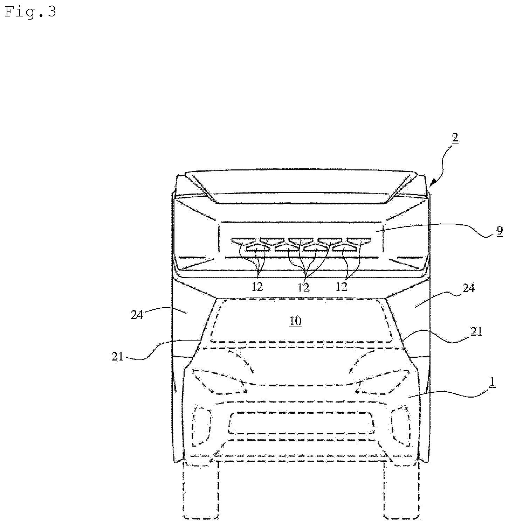

FIG. 3 is a configuration explanatory diagram (3) of the camping vehicle according to the present invention.

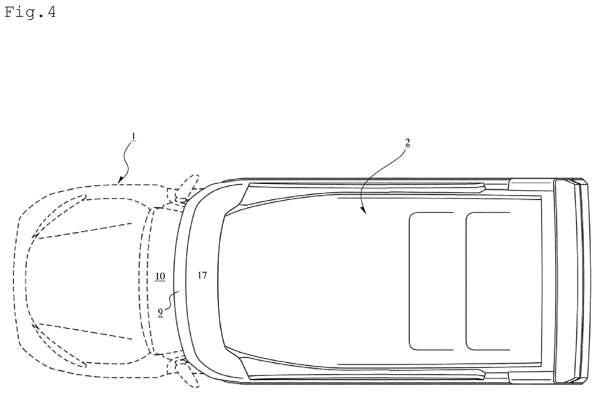

FIG. 4 is a configuration explanatory diagram (4) of the camping vehicle according to the present invention.

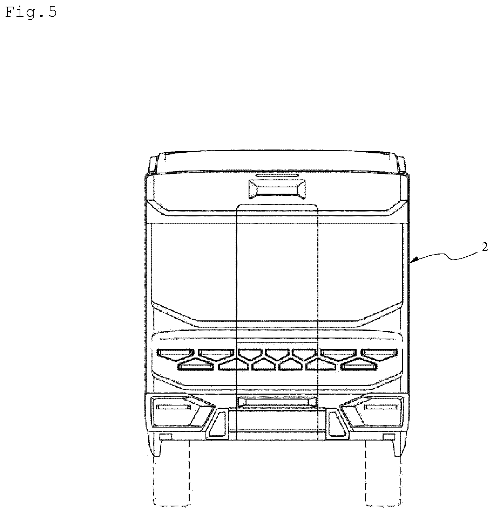

FIG. 5 is a configuration explanatory diagram (5) of the camping vehicle according to the present invention.

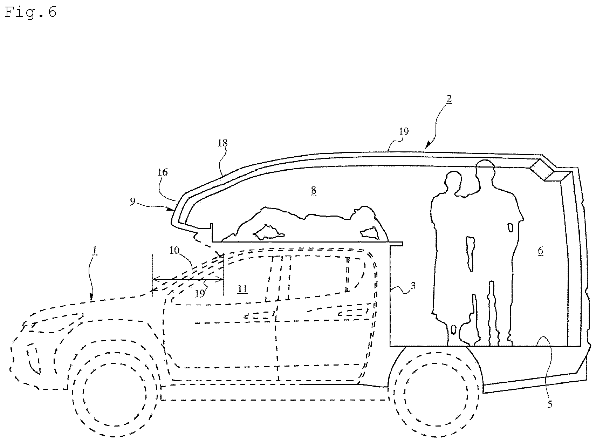

FIG. 6 is a configuration explanatory diagram (6) of the camping vehicle according to the present invention.

### [Reference Signs List]

- 1: Base vehicle
- 2: Shell
- 3: Communication opening
- 5: Bed
- 6: Living space
- 7: Vehicle roof
- 8: Bed space
- 9: Protruding front end
- 10: Windshield surface
- 11: Driver's seat
- 12: Concave shape
- 13: Window
- 15: Vortex generator forming member
- 16: Steep upslope surface
- 17: Gentle upslope surface
- 18: Horizontal surface
- 19: Front-rear-direction length
- 20: Downward slope surface
- 21: Joint
- 22: Front-side vertical end
- 23: Lower-side horizontal end
- 24: Lateral step
- 25: Upper-side horizontal end

## Claims

1. A camping vehicle comprising a pickup truck as a base vehicle and a shell carried and mounted on a bed of the pickup truck to serve as a living space,
wherein an inside of the shell and an inside of the base vehicle are made to communicate with each other by a communication opening so as to enable direct movement from the inside of the base vehicle to an inside of a base,
wherein an external shape of a protruding front end provided on a front side of the shell is formed as a steep upslope surface that extends from a lower end toward an upper end of a front end of the shell at an angle close to vertical, and the protruding front end is formed such that a protrusion length of the protruding front end is within a front-rear length of a windshield surface of the base vehicle, so as to reduce a blind spot produced by protrusion of the protruding front end positioned above a driver's seat part for enlarging a field of view, and so as to reduce a loss of drag coefficient (Cd value) caused by a flow of air coming from front,
wherein, on a front-end surface of the protruding front end, concave shapes continuously arranged in a width direction are formed at a plurality of locations to produce small turbulent flows in air flowing around the protruding front end during traveling, and the turbulent flows are higher in viscosity than a laminar flow to reduce a loss of drag coefficient (Cd value), and
wherein while the shell is joined to the base vehicle with a width of the shell being made larger than a width of the base vehicle so as to widen a living space in the shell, windows on both lateral side surfaces of the shell are formed such that the windows are retracted inward so as to restrain air drag and ensure stability in driving, the air drag is produced by lateral steps at a joined portion between the shell and the base vehicle, and slope surfaces extend from outer lateral surfaces of the shell toward positions of outer circumferences of the windows are formed to decrease a rate of change in section of the outer lateral surfaces of the shell.

2. The camping vehicle according to claim 1, wherein
a location facing a substantially-upper-end position of a front-side vertical end of each window is taken as a start point, a vortex generator forming member with a linear corrugation is bifurcated into parts from the start point, one of the bifurcated parts of the vortex generator forming member is provided obliquely upward so as to be positioned above an upper-side horizontal end of the window and, after being positioned above the upper-side horizontal end of the window, is formed extending parallel to the upper-side horizontal end of the window, and another of the bifurcated parts of the vortex generator forming member is provided obliquely downward from the location that is taken as the start point and faces the substantially-upper-end position of the front-side vertical end of the window and, after being provided obliquely downward, is formed extending substantially parallel to a lower-side horizontal end of the window.

3. The camping vehicle according to claim 1 or claim 2, wherein
the base vehicle is a used vehicle.
